# EUROPÄISCHE PATENTSCHRIFT

(11) **EP 1 233 497 B1**
(45) Veröffentlichungstag und Bekanntmachung des Hinweises auf die Patenterteilung: **24.12.2008**
(21) Anmeldenummer: 02000380.2
(22) Anmeldetag: 07.01.2002
(51) Int. Cl.: H02K 23/40, H02K 1/17

(54) **Permanentmagneterregte Gleichstrommaschine, insbesondere Gleichstrommotor**
Permanent-magnet excited DC machine, such as DC motor
Machine électrique excitée par aimant permanent

(30) Priorität: 15.02.2001 DE 10106928
(43) Veröffentlichungstag der Anmeldung: 21.08.2002
(73) Patentinhaber: AMK Arnold Müller GmbH & Co.KG, 73230 Kirchheim / Teck (DE)
(72) Erfinder: Müller, Arnold, 73230 Kirchheim/Teck (DE)
(74) Vertreter: Kratzsch, Volkhard

(56) Entgegenhaltungen:
- DE-A- 2 263 167
- GB-A- 1 018 660
- US-A- 3 594 599
- PATENT ABSTRACTS OF JAPAN vol. 009, no. 244 (E-346), 30. September 1985 (1985-09-30) -& JP 60 096166 A (YASUKAWA DENKI SEISAKUSHO KK), 29. Mai 1985 (1985-05-29)

## Beschreibung

Die Erfindung betrifft eine permanentmagneterregte Gleichstrommaschine, insbesondere einen permanentmagneterregten Gleichstrommotor, gemäß dem Oberbegriff des Anspruchs 1.

Gleichstrommotoren kleiner Leistung, insbesondere für den Automotivbereich sind nahezu ausschließlich permanentmagneterregt, wobei die Permanentmagnetfelder entweder mit Ringmagneten, die in entsprechender Polbreite magnetisiert sind, oder durch kreisbogenförmige Segmentschalen erzeugt werden. Die die Statorpole bildenden Permanentmagnete sind an der dem Rotor, Läufer oder Anker des Gleichstrommotors zugekehrten Innenfläche des ferromagnetischen Statorjochs um gleiche Umfangswinkel zueinander versetzt angeordnet und begrenzen zusammen mit dem Rotor einen radialen, in Umfangsrichtung des Statorjochs konstanten Arbeitsluftspalt.

Bei einem bekannten Gleichstrommotor (US 2 610 993) sind die Statorpole jeweils aus zwei Permanentmagneten zusammengesetzt, deren quer zu ihrer Magnetisierungsrichtung sich erstreckenden Oberflächen konzentrischen Zylinderflächen folgen. Die eine Oberfläche beider Permanentmagnete liegt luftspaltlos an der Innenfläche des ringförmigen Statorjochs an. Ein kreisbogenförmig gewölbter Polschuh, der mit Schrauben am Statorjoch gehalten ist, übergreift die beiden vom Rotor abgekehrten gewölbten Oberflächen der Permanentmagnete und drückt diese an das Statorjoch an.

Bei einem ebenfalls bekannten Gleichstrommotor (DE 1 160 080, Fig. 3) ist jeder Statorpol des beispielsweise vierpoligen Gleichstrommotors aus zwei gleich gestalteten, quaderförmigen Flachmagneten zusammengesetzt, die an auf der Innenfläche des Statorjochs ausgebildeten, ebenen Flächenabschnitten aufliegen und von einem Polschuh überdeckt sind, der ebenfalls mit auf seiner Rückseite ausgebildeten, eben Flächenabschnitten auf jedem Flachmagnet plan aufliegt. Eine solche Konstruktion der Statorpole des permanentmagneterregten Gleichstrommotors hat den Vorteil, daß die Permanentmagnete eine Form aufweisen, die besonders einfach und ohne Nachbearbeitung mit ausreichendem Toleranzbereich herstellbar ist, und damit solche sog. Flachmagnete am Markt kostengünstig beziehbar sind.

Es ist ferner eine permanentmagneterregte Gleichstrommaschine der eingangs genannten Art aus US-A-3 594 599 bekannt, insbesondere in Form eines Gleichstrommotors, mit einem Stator, der ein ferromagnetisches Statorjoch und am Statorjoch um gleiche Umfangswinkel versetzt angeordnete, radial ins Statorinnere abstehende Statorpole aufweist, die aus an der Innenfläche des Statorjochs anliegenden quaderförmigen Flachmagneten aus Magnetwerkstoff und aus die Flachmagnete überdeckenden ferromagnetischen Polschuhen mit einer kreisförmig gewölbten Oberfläche bestehen. Jedem Polschuh ist lediglich ein Flachmagnet zugeordnet. Dabei ist die in Magnetisierungsrichtung abgegriffene Dicke der Flachmagnete zweier einander diametral gegenüberliegender Polschuhe kleiner bemessen als die Dicke der anderen Flachmagnete zweier anderer, aneinander diametral gegenüberliegender Polschuhe. Alternativ ist ein Gleichstrommotor vorgesehen, bei dem keine Polschuhe vorhanden sind, wobei dort jeweils zwei bogenförmige Magnete, die einander diametral gegenüberstehen, eine geringere Dicke als zwei andere, ebenfalls einander diametral gegenüberliegende Bogenmagnete aufweisen und wobei die Magnete geringerer Dicke in Umfangsrichtung hinter den Magneten größerer Dicke angeordnet sind, wobei die querschnittsdünneren Magnete am Anfang des jeweiligen Pols und die querschnittsdickeren Magnete am Ende des jeweiligen Pols, in Umlaufrichtung Rotors betrachtet, vorgesehen sind. Ähnliches ergibt sich auch bei einem bogenförmigen Magneten je Pol, dessen Dicke vom vorderen zum hinteren Ende hin zunimmt.

Aus DE 22 63 167 ergeben sich elektrische Maschinen mit rechteckigem Gehäuseaufbau, wenn zwischen den von den gegenüberliegenden Polkernen ausgehenden Schenkeln zum Beispiel je zwei im Querschnitt keilförmige Polkerne angeordnet sind, an deren Keilflächen Magnetplatten anliegen. Die zweite Keilfläche dieser Polkerne liegt unter Zwischenlage weiterer Magnetplatten an zugewandten Auflageflächen der Schenkel der gegenüberliegenden Polkerne an. Diese weiteren Magnetplatten sind hinsichtlich ihrer Querschnittsdicke etwa doppelt so stark ausgebildet wie die erstgenannten Magnetplatten.

Der Erfindung liegt die Aufgabe zugrunde, bei einer Gleichstrommaschine der eingangs genannten Art den Feldverlauf des Magnetfeldes im Stator in Hinblick auf ein verbessertes Drehmoment-/Drehzahlverhalten und einen höheren Wirkungsgrad der Gleichstrommaschine zu optimieren.

Die Aufgabe ist erfindungsgemäß durch die Merkmale des Anspruchs 1 gelöst.

Gemäß der Erfindung weisen mindestens die beiden Flachmagnete, die jeweils an einem der in Umfangsrichtung des Statorjochs gesehenen Enden des Polschuhs plaziert sind, eine geringere Dicke als die übrigen Flachmagnete des Statorpols auf. Da die Magnetflußdichte sowohl im Statorjoch als auch im Polschuh von der Mitte eines jeden Statorpols zu dessen Ende hin zunimmt, wird durch Reduzierung der Dicke der beiden äußersten Flachmagnete in jedem Statorpol verhindert, daß die Magnetflußdichte die magnetische Sättigung erreicht. Die erfindungsgemäße permanentmagneterregte Gleichstrommaschine hat den Vorteil, dass durch die Verwendung von quaderförmigen Flachmagneten mit unterschiedlichen Abmessungen in Magnetisierungsrichtung, also mit unterschiedlicher Dicke oder Höhe in Radialrichtung der Maschine gesehen, nicht nur der Preisvorteil der auf dem Markt preisgünstig zu erstehenden Magnetmaterialien, wie Neodym, Kobald, Samarium u.a. genutzt wird, sondern auch der Magnetfluß im Statorjoch und in den Polschuhen so optimiert werden kann, daß einerseits der vorhandene Querschnitt im Eisenmaterial des Stators (Statorjoch und Polschuhe) maximal für die Führung des Magnetflusses genutzt und andererseits die Magnetflußdichte in Teilbereichen des Eisenmaterials nicht in die magnetische Sättigung geht. Die Wahl der Dicke der einzelnen Flachsegmente hängt somit von der gewünschten Magnetflußdichte in den Polbereichen ab, die vorzugsweise nach der Finite-Elemente-Methode berechnet wird. Mit der Optimierung in der Ausnutzung des Eisenquerschnitts zur Magnetflußführung verbessert sich der Wirkungsgrad der Maschine. Die Abdeckung der Vielzahl der Flachmagnete pro Statorpol durch einen einstückigen Polschuh, dessen freie Polfläche einer konzentrischen Zylinderfläche folgt, trägt zur Verbesserung der Flußführung bei und eliminiert sog. Nutpulsationen, so daß sich auch das Drehmoment-/Drehzahlverhalten der Maschine verbessert.

Die erfindungsgemäße Gleichstrommaschine ist besonders geeignet für den Einsatz als Niederspannungsmotor im Fahrzeugbereich, z.B. als Antriebsmotor für Stellvorrichtungen und als Kompressormotor.

Vorteilhafte Ausführungsformen der erfindungsgemäßen Gleichstrommaschine mit zweckmäßigen Weiterbildungen und Ausgestaltungen der Erfindung sind in den weiteren Ansprüchen angegeben.

Gemäß einer vorteilhaften Ausführungsform der Erfindung steht jeder Polschuh mit seinen beiden in Umfangsrichtung des Statorjochs gesehenen Endbereichen über die beiden äußersten Flachmagnete über. Auch diese konstruktive Maßnahme trägt zu einer optimierten Flußführung in den Endbereichen der Polschuhe und damit zu einer Verbesserung des Wirkungsgrands der Gleichstrommaschine bei.

Die Erfindung ist anhand von in der Zeichnung dargestellten Ausführungsbeispielen im folgenden näher beschrieben. Es zeigen jeweils in schematischer Darstellung:
- Fig. 1: einen Querschnitt eines Gleichstrommotors,
- Fig. 2: eine gleiche, vergrößerte Darstellung mit eingezeichneten Magnetflußlinien,
- Fig. 3: einen Querschnitt eines modifizierten Stators des Gleichstrommotors in Fig. 1,
- Fig. 4: eine Draufsicht einer Blechlamelle des Stators in Fig. 3.

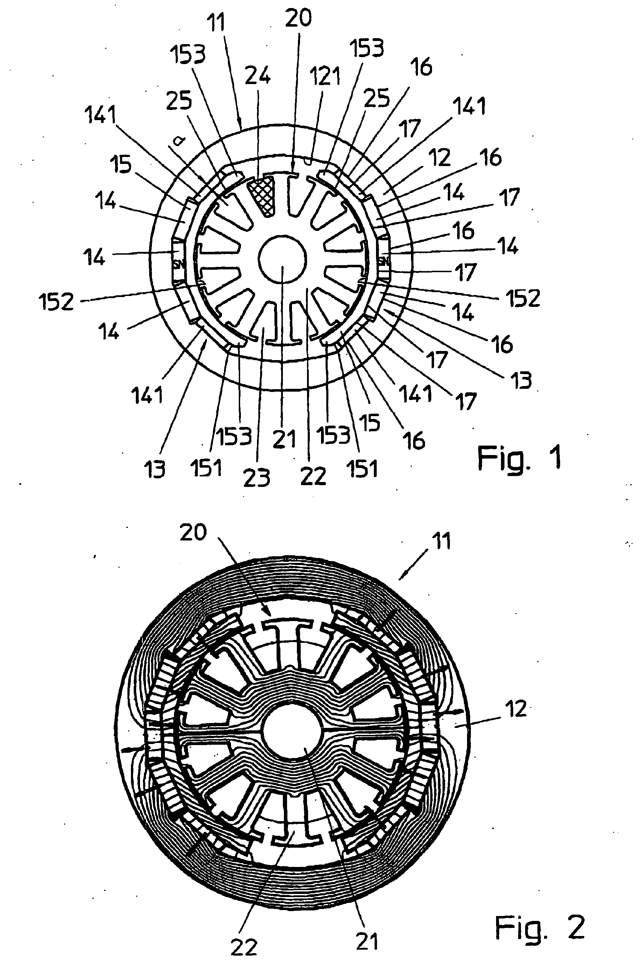

Der in Fig. 1 im Querschnitt schematisch dargestellte, zweipolige Gleichstrommotor als Ausführungsbeispiel für eine allgemeine permanentmagneterregte Gleichstrommaschine weist einen Stator 11 mit einem aus Blechlamellen zusammengesetzten ringförmigen Statorjoch 12 aus ferromagnetischem Material und zwei an der Innenfläche 121 des Statorjochs 12 radial abstehende, diametral angeordnete Statorpole 13 auf. Der übersichtlichen Darstellung halber ist auf eine Schraffur der Schnittflächen verzichtet. Jeder der identisch aufgebauten Statorpole 13 besteht aus mehreren, hier fünf, quaderförmigen Flachmagneten 14 aus Magnetwerkstoff, z. B. Neodym, und aus einem Polschuh 15 aus ferromagnetischem Material. An der Innenfläche 121 des Statorjochs 12 sind im Polbereich ebene Anlageflächen 16 ausgebildet, auf denen die Flachmagnete 14 mit ihrer einen Oberfläche plan aufliegen. Die Anlageflächen 16 sind dabei so ausgerichtet, daß die Normale im Flächenmittelpunkt der sich quer zur Magnetisierungsrichtung erstreckenden Oberfläche der mit dieser Oberfläche an den Anlagenflächen 16 anliegenden Flachmagnete 14 radial ausgerichtet ist.

Die insgesamt fünf Flachmagnete 14 eines jeden Statorpols 13 sind auf ihrer vom Statorjoch 12 abgekehrten Seite vom Polschuh 15 überdeckt, der in Umfangsrichtung des Statorjochs 12 gesehen mit seinen beiden Endbereichen über die beiden äußersten Flachmagnete 141 übersteht. Der kreisbogenartig ausgebildete Polschuh 15 trägt auf seiner dem Statorjoch 12 zugekehrten Rückenfläche 151 ebenfalls Anlageflächen 17 für jeweils einen der Flachmagnete 14 und ist auf seiner Vorderfläche 152 kreisförmig gewölbt, wobei der Polschuh 15 über die Flachmagnete 14 an dem Statorjoch 12 so festgelegt ist, daß er mit seiner Vorderfläche 152 konzentrisch zur Statorachse ausgerichtet ist. Die Flachmagnete 14 liegen an den Anlageflächen 16 und 17 von Statorjoch 12 und Polschuh 15 plan und luftspaltlos an und sind an diesen angeklebt oder anderweitig befestigt. Zwischen den Flachmagneten 14 ggf. verbleibende Lücken werden mit Kunststoff ausgegossen und so die Haftung verbessert. Gleichzeitig wird damit ein Korrosionsschutz für die Flachmagnete 14 erreicht, insbesondere dann, wenn die Anordnung der Flachmagnete 14 außen noch eine Kunststoffumhüllung erhält. Die Flachmagnete 14 sind in Radialrichtung, also quer zu ihren an den Anlageflächen 16, 17 anliegenden Oberflächen, magnetisiert, und zwar in jedem Statorpol 13 gleichsinnig. In Fig. 1 ist die Magnetisierung jeweils im mittleren Flachmagneten 14 der beiden Statorpole 13 symbolisch mit SN bzw. NS eingetragen.

Der wie vorstehend beschrieben aufgebaute Stator 11 umschließt einen Rotor 20, auch Läufer oder Anker genannt, der eine Rotorwelle 21 und einen auf der Rotorwelle 21 drehfest sitzenden Rotorkörper 22 umfaßt. Die Rotorwelle 21 ist koaxial zur Statorachse ausgerichtet und in einem den Stator 11 aufnehmenden, hier nicht dargestellten Maschinengehäuse drehbar gelagert. Der wie der Stator 11 aus einem lamellierten Eisenblechpaket bestehende zylindrische Rotorkörper 22 weist in bekannter Weise eine Vielzahl von Axialnuten 23 auf, die um gleiche Winkel gegeneinander versetzt am Umfang des Rotorkörpers 22 angeordnet sind. In den Axialnuten 23 ist eine Anker- oder Rotorwicklung 24 eingelegt, die in Fig. 1 durch Schraffur einer Axialnut 23 angedeutet ist. Zwischen dem Außenumfang des Rotorkörpers 22 und den Polschuhen 15 der beiden Statorpole 13 ist in bekannter Weise jeweils ein Arbeitsluftspalt 25 vorhanden, der von dem von den Statorpolen 13 erzeugten Magnetfeld durchsetzt ist.

Die Feldlinien des von den Statorpolen 13 erzeugten Magnetfelds sind in Fig. 2 dargestellt. Um einen guten Wirkungsgrad des Gleichstrommotors sicherzustellen, ist darauf zu achten, daß die Dichte des von den Flachmagneten 14 erzeugten Magnetfelds oder Magnetflusses an keiner Stelle im Statorjoch 12 die magnetische Sättigung erreicht. Das gleiche gilt auch für die Magnetflußdichte in den Polschuhen 15. Um eine optimale Flußführung sicherzustellen, sind daher in jedem Statorpol 13 die Flachmagnete 14 in ihrer in Magnetisierungsrichtung gesehenen Dicke d (radiale Höhe) so ausgelegt, daß unter Vermeidung der magnetischen Sättigung eine maximale Flußdichte im Statorjoch 12 erzielt wird. Wie in dem in Fig. 2 dargestellten Feldverlauf im Stator 11 und Rotor 20 zu sehen ist, nimmt die Flußdichte im Statorjoch 12 im Bereich eines jeden Polschuhs 15 von der Polmitte zum Polende hin zu. Aus den vorstehend genannten Gründen ist daher die Dicke d der beiden äußersten der symmetrisch zur Mittellinie des Statorpols 13 angeordneten Flachmagnete 141 kleiner ausgeführt, so daß der Beitrag der beiden äußersten Flachmagnete 141 zu dem von den Flachmagneten 14 insgesamt erzeugten Magnetfeld kleiner ist als der der übrigen Flachmagnete 14.

Selbstverständlich ist es möglich, für eine weitere Optimierung der Flußführung im Statorjoch 12 bei veränderten konstruktiven Gegebenheiten auch die Dicke d der übrigen drei Flachmagnete 14, die im Ausführungsbeispiel der Fig. 1 noch gleich ausgeführt sind, ebenfalls zu variieren.

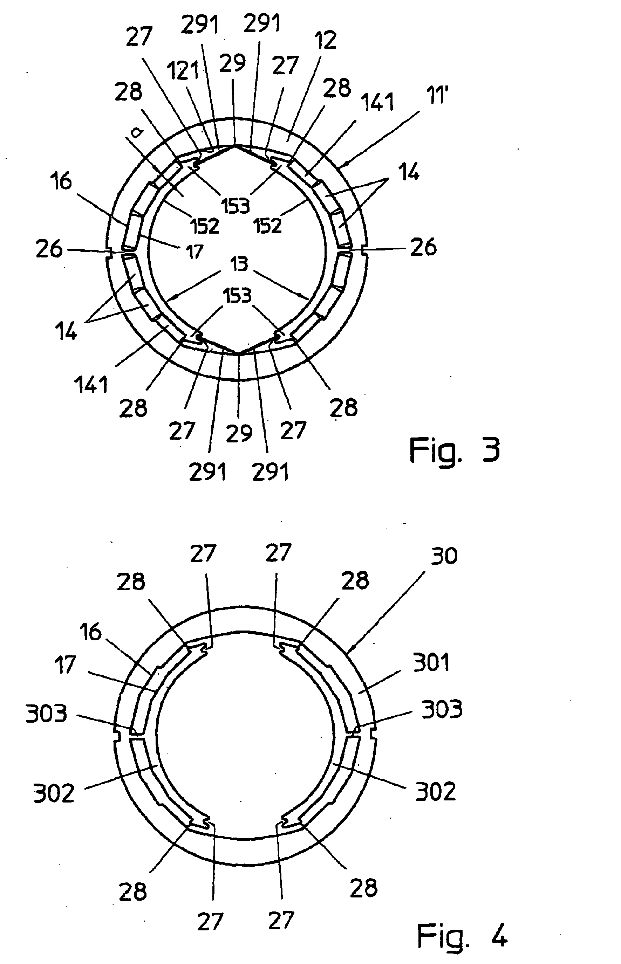

Bei dem in Fig. 3 im Querschnitt dargestellten modifizierten Stator 11' sind die Polschuhe 15 der wiederum einander diametral am Statorjoch 12 gegenüberliegenden Statorpole 13 direkt mit dem Statorjoch 12 verbunden, und zwar über einen jeweils mittig am Polschuh 15 ansetzenden Axialsteg 26. Die Flachmagnete 14, von denen hier jeweils sechs quaderförmige Flachmagnete einem Statorpol 13 zugeordnet sind, sind zwischen der Rückenfläche 151 des Polschuhs 15 und der Innenfläche 121 des Statorjochs 12 eingeschoben und liegen in gleicher Weise wie in Fig. 1 mit ihren quer zur Magnetisierungsrichtung sich erstreckenden Oberflächen an in der Innenfläche 121 des Statorjochs 12 und in der Rückenfläche 151 des Polschuhs 15 ausgebildeten Anlagenflächen 16 bzw. 17 plan und luftspaltlos an. Die zwischen den Flachmagneten 14 verbleibenden, axialen, keilförmigen Spalte werden mit Kunststoff ausgegossen, wodurch die Flachmagnete 14 festgelegt werden und gleichzeitig einen Korrosionsschutz erhalten. Der Kunststoff kann auch aus Korrosionsschutzgründen die Stirnseiten der Flachmagnete 14 überziehen und auch den Raum zwischen dem Statorjoch 12 und den Polschuhenden 153 ausfüllen. Die einander zugekehrten Polschuhenden 153 der Polschuhe 15 weisen einerseits einen zur Innenfläche 121 des Statorjochs 12 hin gerichteten Vorsprung 28 sowie eine in der radialen Stirnfläche eingearbeitete Einkerbung 27 auf. Der Vorsprung 28 bildet eine Anlagekante für den äußersten Flachmagneten 141, die ein spielloses Aneinanderliegen der Flachmagnete 14 in Umfangsrichtung des Polschuhs 15 gewährleistet. Die Einkerbungen 27 dienen zur Aufnahme einer Andruckspange 29, welche die Polschuhenden 153 in radialer Richtung belastet und dadurch die Flachmagnete 14 zwischen dem Polschuh 15 und dem Statorjoch 12 kraftschlüssig festlegt. Die aus nichtmagnetischem Federstahl gefertigte Andruckspange 29 weist zwei unter einem stumpfen Winkel voneinander abgespreizte, flache Schenkel 291 auf. Nach Einsetzten der Flachmagnete 14 in den Stator 11' wird jeweils zwischen den einander zugekehrten Polschuhenden 153 der beiden Polschuhe 15 eine Andruckspange 29 mit ihren Schenkelenden in die Einkerbungen 27 eingesetzt. Die Andruckspange 29 stützt sich dann mittig an der Innenfläche 121 des Statorjochs 12 ab und erzeugt eine radial nach außen gerichtete Spannkraft an den Polschuhenden 153. Die Andruckspange 29 ist in Achsrichtung des Stators 11 so breit ausgeführt, daß sie sich über einen wesentlichen Teil der axialen Länge des Stators 11' erstreckt. Alternativ können mehrere schmale Andruckspangen 29 mit axialem Abstand voneinander in die Polschuhenden 153 eingesetzt werden.

Statorjoch 12 und Polschuhe 15 sind auch im Ausführungsbeispiel des Stators 11' gemäß Fig. 3 lamelliert und aus einer Vielzahl von axial aufeinandergelegten Lamellen aus ferromagnetischem Material, sog. Blechlamellen 30, zu einem Blechpaket zusammengesetzt. Die Verbindung der Blechlamellen 30 wird durch sog. Stanzpaketieren oder Schweißen, Nieten od. dgl. erreicht. Jede gestanzte Blechlamelle 30 weist sowohl ein Statorprofil 301 als auch ein damit einstückiges Polschuhprofil 302 auf, die über ein mittig verlaufendes Stegprofil 303 miteinander einstückig verbunden sind. Jedes Polschuhprofil 302 trägt an seinem Ende den Vorsprung 28 und die Einkerbung 27. Die Vielzahl der Statorjochprofile 301 bildet das Statorjoch 12, die Vielzahl der Polschuhprofile 302 die Polschuhe 15 und die Vielzahl der Stegprofile 303 die beiden Axialstege 26 im komplettierten Blechpaket des Stators 11'.

Selbstverständlich ist es z.B. aus Festigkeitsgründen möglich, die Polschuhe 15 über mehrere Stege 26 einstückig mit dem Statorjoch 12 zu verbinden. Mehrere Axialstege werden dabei so angeordnet, daß zwischen ihnen ein oder mehrere Flachmagnete 14 in Umfangsrichtung des Stators 11' spiellos gehalten werden.

Die Zahl der mit den Flachmagneten 14 besetzten Statorpole 13 ist nicht auf zwei beschränkt. So kann der Stator 11 2p Statorpole 13 aufweisen, wobei p eine Zahl größer Null ist.

## Patentansprüche

1. Permanentmagneterregte Gleichstrommaschine, insbesondere Gleichstrommotor, mit einem Stator (11; 11'), der ein ferromagnetisches Statorjoch (12) und am Statorjoch (12) um gleiche Umfangwinkel versetzt angeordnete, radial ins Statorinnere abstehende Statorpole (13) aufweist, die aus an der Innenfläche des Statorjochs (12) anliegenden, quaderförmigen Flachmagneten (14) aus Magnetwerkstoff und die Flachmagnete (14) überdeckenden ferromagnetischen Polschuhen (15) mit einer kreisförmig gewölbten Oberfläche bestehen, wobei die in Magnetisierungsrichtung abgegriffene Flachmagnet-Dicke (d) eines Statorpols (13) gegenüber derjenigen eines anderen Statorpols (13) variiert ist,
**dadurch gekennzeichnet,**
**dass** jeder einzelne Statorpol (13) mehrere in Umfangsrichtung nebeneinander angeordnete, gleichsinnig magnetisierte Flachmagnete (14) aufweist, deren Dicke (d) variiert ist, und dass mindestens die beiden Flachmagnete (141), die an den in Umfangsrichtung des Statorjochs (12) gesehenen Enden eines Polschuhs (15) plaziert sind, eine geringere Dicke (d) als die übrigen Flachmagnete (14) aufweisen.

2. Maschine nach Anspruch 1,
**dadurch gekennzeichnet,**
**dass** die Dicke (d) der einzelnen Flachmagnete (14) eines Statorpols (13) durch die maximal zulässige Flußdichte im Querschnitt von Statorjoch (12) und Polschuh (15) bestimmt ist.

3. Maschine nach Anspruch 1 oder 2,
**dadurch gekennzeichnet,**
**dass** Flachmagnete (14) gleicher Dicke (d) spiegelsymmetrisch zur Mittellinie des Statorpols (13) angeordnet sind.

4. Maschine nach einem der Ansprüche 1 bis 3,
**dadurch gekennzeichnet,**
**dass** in Umfangsrichtung des Statorjochs (12) gesehen jeder Polschuh (15) mit seinen beiden Polschuhenden (153) über die beiden äußersten Flachmagnete (141) übersteht.

5. Maschine nach einem der Ansprüche 1 bis 4,
**dadurch gekennzeichnet,**
**dass** die Flachmagnete (14) an dem Statorjoch (12) so angeordnet sind, dass jeweils die Normale im Flächenmittelpunkt der sich quer zur Magnetisierungsrichtung erstreckenden Fläche der Flachmagnete (14) radial ausgerichtet ist.

6. Maschine nach einem der Ansprüche 1 bis 5,
**dadurch gekennzeichnet,**
**dass** an der Innenfläche (121) des Statorjochs (12) und an der dem Statorjoch (12) zugekehrten Rückenfläche (151) der Polschuhe (15) jeweils ebene Anlageflächen (16, 17) ausgebildet sind, an denen die Flachmagnete (14) mit ihren quer zur Magnetisierungseinrichtung verlaufenden, voneinander abgekehrten Oberflächen plan anliegen.

7. Maschine nach Anspruch 6,
**dadurch gekennzeichnet,**
**dass** die Flachmagnete (14) auf den Anlageflächen (16, 17) an Statorjoch (12) und an den Polschuhen (15) befestigt, vorzugsweise aufgeklebt, sind.

8. Maschine nach einem der Ansprüche 1 bis 6,
**dadurch gekennzeichnet,**
**dass** die Polschuhe (15) über jeweils mindestens einen Axialsteg (26) mit dem Statorjoch (12) verbunden sind.

9. Maschine nach Anspruch 8,
**dadurch gekennzeichnet,**
**dass** der mindestens eine Axialsteg (26) mittig am Polschuh (15) ansetzt.

10. Maschine nach Anspruch 8 oder 9,
**dadurch gekennzeichnet,**
**dass** das Statorjoch (12) und die Polschuhe (15) aus einer Vielzahl axial aneinandergesetzter Blechlamellen (30) paketiert sind und dass jede Blechlamelle (30) ein Statorjochprofil (301) und damit einstückige Polschuhprofile (302) aufweist.

11. Maschine nach einem der Ansprüche 1 bis 10,
**dadurch gekennzeichnet,**
**dass** an den einander zugekehrten Polschuhenden (153) der Polschuhe (15) eine Andruckspange (29) angreift, die sich an der Innenfläche (121) des Statorjochs (12) abstützt.

12. Maschine nach Anspruch 11,
**dadurch gekennzeichnet,**
**dass** die Andruckspange (29) zwei mit einem stumpfen Winkel voneinander abgespreizte Schenkel (291) aus nichtmagnetischem Federstahl aufweist, die mit ihren Schenkelenden an den Polschuhenden (153) ansetzen und mit ihrer Verbindungsstelle an der Innenfläche (121) des Statorjochs (12) mit Vorspannung anliegen.

13. Maschine nach Anspruch 12,
**dadurch gekennzeichnet,**
**dass** in den Polschuhenden (153) Einkerbungen (27) zum Einstecken der Schenkelenden der Schenkel (291) der Andruckspange (29) ausgebildet sind.

14. Maschine nach einem der Ansprüche 1 bis 13,
**dadurch gekennzeichnet,**
**dass** die Andruckspange (29) sich über einen wesentlichen Teil der axialen Länge des Stators (11') erstreckt.

15. Maschine nach einem der Ansprüche 1 bis 14,
**dadurch gekennzeichnet,**
**dass** die Anordnung der nebeneinandergereihten Flachmagnete (14) mit Kunststoff aus- und/oder umgossen ist.

## Claims

1. DC machine with permanent magnet excitation, in particular a DC motor, having a stator (11; 11') which has a ferromagnetic stator yoke (12) and stator poles (13) which are arranged offset through the same circumferential angle on the stator yoke (12), project radially into the stator interior and comprise cuboid flat magnets (14), which rest on the inner surface of the stator yoke (12) and are composed of magnetic material, and ferromagnetic pole shoes (15), which cover the flat magnets (14) and have a surface which is curved in a circular shape, with the flat magnet thickness (d), measured in the magnetization direction, of one stator pole (13) being varied in comparison to that of another stator pole (13),
**characterized in that**
each individual stator pole (13) has a plurality of flat magnets (14) which are arranged alongside one another in the circumferential direction and are magnetized in the same sense, and whose thickness (d) is varied, and that at least the two flat magnets (141) which are placed at the ends of a pole shoe (15) when seen in the circumferential direction of the stator yoke (12) are thinner (d) than the other flat magnets (14).

2. Machine according to Claim 1,
**characterized in that**
the thickness (d) of the individual flat magnets (14) on one stator pole (13) is governed by the maximum permissible flux density in the cross section of the stator yoke (12) and pole shoe (15).

3. Machine according to Claim 1 or 2,
**characterized in that**
flat magnets (14) with the same thickness (d) are arranged with mirror-image symmetry with respect to the centre line of the stator pole (13).

4. Machine according to one of Claims 1 to 3,
**characterized in that,**
seen in the circumferential direction of the stator yoke (12), the two pole shoe ends (153) of each pole shoe (15) project beyond the two outermost flat magnets (141).

5. Machine according to one of Claims 1 to 4,
**characterized in that**
the flat magnets (14) are arranged on the stator yoke (12) such that the normal at the surface centre point of the area of the flat magnets (14), which extends transversely with respect to the magnetization direction, is in each case aligned radially.

6. Machine according to one of Claims 1 to 5,
**characterized in that**
flat contact surfaces (16, 17) are respectively formed on the inner surface (121) of the stator yoke (12) and on the rear surface (151), facing away from the stator yoke (12), of the pole shoes (15), on which contact surfaces (16, 17) the flat magnets (14) rest flat with their surfaces which run transversely with respect to the magnetization direction and face away from one another.

7. Machine according to Claim 6,
**characterized in that**
the flat magnets (14) are attached on contact surfaces (16, 17) to the stator yoke (12) and to the pole shoes (15), preferably be adhesive bonding.

8. Machine according to one of Claims 1 to 6,
**characterized in that**
the pole shoes (15) are connected to the stator yoke (12) via in each case at least one axial web (26).

9. Machine according to Claim 8,
**characterized in that**
the at least one axial web (26) is fitted centrally to the pole shoe (15).

10. Machine according to Claim 8 or 9,
**characterized in that**
the stator yoke (12) and the pole shoes (15) are packeted from a multiplicity of sheet-metal laminates (30) which are axially adjacent to one another, and **in that** each sheet-metal laminate (30) has a stator yoke profile (301) and pole shoe profiles (302) which are integral therewith.

11. Machine according to one of Claims 1 to 10,
**characterized in that**
a contact-pressure clasp (29) acts on the mutually facing pole shoe ends (153) of the pole shoes (15) and is supported on the inner surface (121) of the stator yoke (12).

12. Machine according to Claim 11,
**characterized in that**
the contact-pressure clasp (29) has two limbs (291) which are spread apart from one another at an obtuse angle, are composed of non-magnetic spring steel and their limb ends rest on the pole shoe ends (153), and their connecting point rests on the inner surface (121) of the stator yoke (12) in a prestressed manner.

13. Machine according to Claim 12,
**characterized in that**
notches (27) are formed in the pole shoe ends (153), for insertion of the limb ends of the limbs (291) of the contact-pressure clasp (29).

14. Machine according to one of Claims 1 to 13,
**characterized in that**
the contact-pressure clasp (29) extends over a major part of the axial length of the stator (11').

15. Machine according to one of Claims 1 to 14,
**characterized in that**
the arrangement of the flat magnets (14) which are arranged alongside one another is encapsulated and/or surrounded with plastic.

## Revendications

1. Machine à courant continu à excitation par aimant permanent, notamment moteur à courant continu, comprenant un stator (11 ; 11') qui présente une culasse de stator (12) et des pôles de stator (13) disposés sur la culasse de stator (12) en étant décalés selon des angles inscrits égaux et faisant saillie dans le sens radial à l'intérieur du stator, lesquels se composent d'aimants plats (14) de forme parallélépipédique en matériau magnétique qui reposent sur la surface intérieure de la culasse de stator (12) et de pièces polaires (15) ferromagnétiques munies d'une surface bombée circulaire qui recouvrent les aimants plats (14), l'épaisseur d'aimant plat (d) d'un pôle de stator (13) mesurée dans le sens de la magnétisation étant variable par rapport à celle d'un autre pôle de stator (13), **caractérisée en ce que** chaque pôle de stator (13) individuel présente plusieurs aimants plats (14) disposés les uns à côté des autres dans le sens du pourtour et magnétisés dans le même sens dont l'épaisseur (d) varie et qu'au moins les deux aimants plats (141) qui, vus dans le sens du pourtour de la culasse de stator (12), se trouvent aux extrémités d'une pièce polaire (15), présentent une épaisseur (d) plus faible que les autres aimants plats (14).

2. Machine selon la revendication 1, **caractérisée en ce que** l'épaisseur (d) de chacun des aimants plats (14) d'un pôle de stator (13) est déterminée par la densité de flux maximale admissible dans la section transversale de la culasse de stator (12) et de la pièce polaire (15).

3. Machine selon la revendication 1 ou 2, **caractérisée en ce que** les aimants plats (14) de même épaisseur (d) sont disposés avec une symétrie en miroir par rapport à la ligne centrale du pôle de stator (13).

4. Machine selon l'une des revendications 1 à 3, **caractérisée en ce que** vue dans le sens du pourtour de la culasse de stator (12), chaque pièce polaire (15) dépasse avec ses deux extrémités de pièce polaire (153) au-dessus des deux aimants plats (141) les plus à l'extérieur.

5. Machine selon l'une des revendications 1 à 4, **caractérisée en ce que** les aimants plats (14) sont disposés sur la culasse de stator (12) de telle sorte que la normale du point central de la surface des aimants plats (14) qui s'étend transversalement par rapport au sens de la magnétisation est à chaque fois orientée dans le sens radial.

6. Machine selon l'une des revendications 1 à 5, **caractérisée en ce que** sur la surface intérieure (121) de la culasse de stator (12) et sur la surface dorsale (151) des pièces polaires (15) adjacente à la culasse de stator (12) sont à chaque fois formées des surfaces d'appui (16, 17) planes sur lesquelles reposent les aimants plats (14) avec leurs surfaces opposées l'une à l'autre qui s'étendent transversalement par rapport au dispositif de magnétisation.

7. Machine selon la revendication 6, **caractérisée en ce que** les aimants plats (14) sont fixés, de préférence collés, sur les surfaces d'appui (16, 17) de la culasse de stator (12) et des pièces polaires (15).

8. Machine selon l'une des revendications 1 à 6, **caractérisée en ce que** les pièces polaires (15) sont reliées avec la culasse de stator (12) à chaque fois par le biais d'au moins une nervure axiale (26).

9. Machine selon la revendication 8, **caractérisée en ce que** l'au moins une nervure axiale (26) repose au centre sur la pièce polaire (15).

10. Machine selon la revendication 8 ou 9, **caractérisée en ce que** la culasse de stator (12) et les pièces polaires (15) sont constituées d'un paquet d'une pluralité de lamelles en tôle (30) posées les unes sur les autres et que chaque lamelle en tôle (30) présente un profil de culasse de stator (301) et un profil de pièce polaire (302) d'une seule pièce avec celui-ci.

11. Machine selon l'une des revendications 1 à 10, **caractérisée en ce qu'**une attache de compression (29) qui s'appuie sur la surface intérieure (121) de la culasse de stator (12) vient en prise avec les extrémités de pièce polaire (153) adjacentes l'une à l'autre des pièces polaires (15).

12. Machine selon la revendication 11, **caractérisée en ce que** l'attache de compression (29) présente deux branches (291) en acier à ressort non magnétique écartées l'une de l'autre sous un angle aigu, lesquelles s'appuient avec leurs extrémités de branche sur les extrémités des pièces polaires (153) et reposent sous précontrainte avec leur point de liaison sur la surface intérieure (121) de la culasse de stator (12).

13. Machine selon la revendication 12, **caractérisée en ce que** des encoches (27) destinées à insérer les extrémités des branches (291) de l'attache de compression (29) sont formées dans les extrémités des pièces polaires (153).

14. Machine selon l'une des revendications 1 à 13, **caractérisée en ce que** l'attache de compression (29) s'étend sur une partie importante de la longueur axiale du stator (11').

15. Machine selon l'une des revendications 1 à 14, **caractérisée en ce que** l'arrangement des aimants plats (14) alignés les uns à côté des autres est moulé et/ou enrobé de matière plastique.
